(19) Europäisches Patentamt / European Patent Office / Office européen des brevets

(11) **EP 2 956 344 B1**

(12) **EUROPEAN PATENT SPECIFICATION**

(45) Date of publication and mention
of the grant of the patent:
**19.12.2018 Bulletin 2018/51**

(21) Application number: **14751971.4**

(22) Date of filing: **31.01.2014**

(51) Int Cl.:
*B60W 10/00* (2006.01)      *B60W 10/10* (2012.01)
*B60W 10/18* (2012.01)      *B60W 30/14* (2006.01)
*B60W 30/18* (2012.01)      *B60W 40/10* (2012.01)
*B60W 40/13* (2012.01)      *G01G 19/03* (2006.01)
*F16H 59/00* (2006.01)

(86) International application number:
**PCT/SE2014/050124**

(87) International publication number:
**WO 2014/126522 (21.08.2014 Gazette 2014/34)**

(54) **A METHOD FOR MANAGING PARAMETERS THAT INFLUENCE THE DRIVING RESISTANCE**

VERFAHREN ZUR VERWALTUNG VON FAHRWIDERSTAND BEEINFLUSSENDEN PARAMETERN

PROCÉDÉ DE GESTION DES PARAMÈTRES QUI INFLUENCENT LA RÉSISTANCE À LA CONDUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2013 SE 1350171**

(43) Date of publication of application:
**23.12.2015 Bulletin 2015/52**

(73) Proprietor: **Scania CV AB**
**151 87 Södertälje (SE)**

(72) Inventor: **HANSSON, Jörgen**
**S-129 42 Hägersten (SE)**

(56) References cited:
**DE-A1- 10 235 969         DE-A1-102009 026 687**
**DE-B3-102011 013 022     SE-C2- 536 326**
**US-A1- 2007 162 210       US-A1- 2012 083 985**
**US-B1- 6 314 383**

## Description

### Technical field

The present invention pertains to a method for the management of a change in real values for parameters impacting a driving resistance for a vehicle and a system for management of a change in real values for parameters which impact a driving resistance for a vehicle.

The invention also pertains to a computer program and a computer program product, which implement the method according to the invention.

### Background

The following background description constitutes a description of the background to the present invention, which does not have to constitute prior art.

Control systems comprising one or more regulators are currently used to control a large number of different types of systems in a vehicle, e.g. systems for gear selection and cruise control. The control is based on a number of parameters necessary for enabling the control systems to carry out necessary calculations and/or to make appropriate decisions.

A mass m of a vehicle, where the vehicle may consist of a vehicle platoon, constitutes an important parameter in many functions of a vehicle's control systems. The mass $m$ of the vehicle impacts the vehicle considerably in many situations, which is why it is very important to be able to estimate this mass $m$ accurately. The vehicle's mass $m$ is typically included in dynamic models of the vehicle, describing e.g. the forces acting on the vehicle. Such models may be used for a number of different calculations and controls in the vehicle, e.g. to control a brake system in the vehicle.

For a vehicle that may transport large loads, such as buses, which may transport a large number of people, or trucks, which may transport different types of cargo with heavy weights, the mass may vary considerably. For example, an unloaded truck weighs considerably less than the same truck when it is loaded to its maximum capacity. An empty bus also has a considerably lower mass than the same bus when it is full of passengers. For e.g. a passenger car, the variations in mass are smaller than for vehicles designed to transport large loads, but even here the difference between an empty and a fully loaded passenger car, where the fully loaded passenger car may also comprise a connected and loaded trailer, may be relatively large in relation to the low mass of the passenger car.

A rolling resistance force $F_{roll}$ which the vehicle experiences is also an important parameter for control systems in the vehicle. The road gradient $\alpha$ for a road section where the vehicle is located, and/or a road section in front of the vehicle, and the air resistance parameter $C_{air}$, which is related to the air resistance force $F_{air}$, may constitute important parameters for the control systems in several applications.

The vehicle mass $m$, the rolling resistance force $F_{roll}$, the air resistance parameter $C_{air}$ and the road gradient $\alpha$ impact a driving resistance force $F_{drivingres}$ for the vehicle, meaning that one or several of the vehicle's mass $m$, the rolling resistance force $F_{roll}$, the air resistance parameter $C_{air}$ and the road gradient $\alpha$ are important parameters e.g. for automatic gear selection. Automatic gear selection is for example carried out in an automated manual gearbox, where it is important to be able to determine the current driving resistance $F_{drivingres}$ and thus which gear should be selected at a given time.

The manner in which the topography of a road section impacts the vehicle is also heavily dependent on the road gradient $\alpha$ and the vehicle's mass $m$, since the mass $m$ and the road gradient $\alpha$ are decisive for how much the vehicle is accelerated and retarded by a downhill and an uphill slope, respectively. Both the vehicle's mass m and a road gradient $\alpha$ of a road section are thus important parameters also in cruise controls, taking into consideration the topography of a road section, so-called Look-Ahead cruise controls, where the size of a requested engine torque at any given time is dependent on how the topography of the road section ahead will impact the vehicle's speed.

Today there are several methods that may be applied in order to estimate the vehicle mass $m$. One such method uses information from an air suspension system in the vehicle. The air suspension system measures the shaft load on all the shafts with air suspension, and reports this load to a control device, which, based on these loads, may calculate the mass of the vehicle.

DE 102 35 969 A1 discloses a method for controlling an automatic transmission allowing a more accurate determination of driving resistance and vehicle mass. By ascertaining a driving resistance by means of an excess of torque and a vehicle acceleration present as a function of a signal representing a road gradient value from an inclination sensor and determining a current vehicle mass by comparing a current torque excess vehicle acceleration relationship with a defined vehicle mass in a characteristic map or determined as a mathematical formula torque excess vehicle acceleration characteristic curve is determined, the current vehicle mass can be used as a standalone size in the adjustment of the current driving situation adapted translation. With low computational effort, the shift quality can thus be significantly improved in a motor vehicle with automatic transmission.

DE 10 2011 013022 B3 discloses, according to the respective preambles of claims 1 and 13, a method for determining the driving resistance of a vehicle. The vehicle mass and driving resistance coefficients are estimated by means of an estimation method taking into account sensor signals before the start of the journey. By means of this estimate, an initial value for the driving resistance is calculated. Other prior art methods for mass estimation consist of acceleration-based mass estimations. These use the fact that mass may be calculated based on a force which the engine adds to the vehicle and an acceleration resulting from this force. The force from the engine is known in the vehicle, but for these methods acceleration must be measured or estimated. According to another method, acceleration is estimated with the use of an accelerometer. The accelerometer based method has one advantage in that the acceleration is measured directly. According to another method, the acceleration is estimated during shifting. This method uses the assumption that the driving resistance remains unchanged during shifting and therefore compares the vehicle's acceleration before, during and after shifting to determine the vehicle's mass.

The rolling resistance force $F_{roll}$, or the rolling friction which it is also called, depends among others on the material of the tyres and the type of driving surface. A gravel road, for example, produces a larger rolling resistance than asphalt. The rolling resistance force $F_{roll}$ may be determined by assuming that, in a dynamic vehicle model, everything is known except the rolling resistance force $F_{roll}$ and then allowing the rolling resistance force $F_{roll}$ to consist of the remaining forces in the model. The rolling resistance force $F_{roll}$ may also be calculated based on data in two operating points, if the vehicle mass $m$, acceleration $a$, and road gradient $\alpha$, are known at these two different points in time.

The road gradient $\alpha$ may be obtained based on a map jointly with GPS information (Global Positioning System), on radar information, on camera information, on information from another vehicle, on positioning information and on road gradient information stored earlier in the vehicle, or on information obtained from a traffic system related to said road section. The road gradient $\alpha$ may also be determined in the vehicle by using an accelerometer, a power equation and/or an elevation change. In systems where information exchange between vehicles is used, the road gradient $\alpha$ estimated by one vehicle may also be provided to other vehicles, either directly or via an intermediate unit, such as a database or similar.

The air resistance parameter $C_{air}$ may, e.g. in a similar manner as for the rolling resistance force $F_{roll}$ above, be calculated based on data at two operating points, if the vehicle mass $m$, the acceleration $a$, and the road gradient $a$ are known at these two different points in time.

## Brief description of the invention

Control systems in the vehicle thus base the control of a large number of functions and/or systems on a number of parameters, which are required for enabling the control systems to carry out necessary calculations and/or to make appropriate decisions. It is therefore very important that the values of the vehicle mass m and the rolling resistance force $F_{roll}$ and, for some applications, also the road gradient $\alpha$ and the air resistance parameter $C_{air}$ are reliable, since a large number of functions in the vehicle otherwise risk to be controlled in a less than optimal manner. Control based on inaccurate parameters may among others lead to higher fuel consumption, lower performance and/or heavier wear and tear of the vehicle. At the same time, the vehicle's calculation complexity should be kept low, by not determining the values of these parameters more often than necessary.

Significant changes in the vehicle mass $m$ may arise e.g. in connection with reloading of a truck or when passengers board a bus. The rolling resistance force $F_{roll}$ may also change significantly, e.g. in connection with changing from one road to the next, where the second road has a different base, e.g. gravel, than the base of the first road, which may e.g. be asphalt. The road gradient $\alpha$ may also change significantly e.g. at the crest of a hill or a slump.

The air resistance force $F_{air}$ may also change considerably, e.g. on passing a curve, the crest of a hill or a tunnel. The air resistance force $F_{air}$ depends on the vehicle's squared speed, $F_{air} = C_{air} \cdot v^2$, where $C_{air}$ is the air resistance parameter, meaning that changes in the vehicle's speed also produce large changes in the air resistance force $F_{air}$. The air resistance parameter $C_{air}$ is dependent mainly on the vehicle's front area and on the vehicle's air resistance coefficient. The air resistance coefficient may be changed, e.g. if new equipment is mounted or dismounted on the vehicle, such as light bars or other equipment, such as trimmings. The front area may be altered, e.g. if a trailer is connected to or disconnected from the vehicle and for instance protrudes outside the driver's cabin.

These significant alterations may entail that the control of a number of important systems and/or functions in the vehicle becomes deficient and/or dangerous.

One objective of the present invention is to address said problem(s).

This objective is achieved through the above-mentioned method in accordance with the characterising portion of patent claim 1. This objective is achieved also through the above-mentioned system in accordance with the characterising portion of patent claim 22. The objective is also achieved through the above-mentioned computer program and computer program product.

With the use of the present invention, this objective is achieved, i.e. a quick detection of whether any of these parameters has changed is obtained, e.g. where the vehicle is reloaded or where the base changes, which means that new estimations of the parameters may be carried out, or that the control systems are informed that the parameter values available at this time are not reliable. Thus a large number of wrong decisions may be avoided in the vehicle's control devices, e.g. in connection with gear selection or speed control with cruise control.

The present invention uses a longitudinal vehicle model, the vehicle mass *m,* the vehicle acceleration *a* and representations of the forces which may be measured and/or calculated, e.g. based on torque and gearings, in the vehicle in order to detect in real time whether e.g. a vehicle mass or a rolling resistance has been changed. According to one embodiment of the invention, a residual-based detector is used to identify such changes.

According to one embodiment, a residual signal based on the longitudinal vehicle model is created. The residual signal is provided with a trigger, which sums up the residual signal, the output signal of which is then used to determine e.g. whether the vehicle has been reloaded, whether the base has changed, whether a road gradient has changed or whether an air resistance parameter has changed.

If a change is identified, estimation algorithms for the respective parameter may be restarted or speeded up, so that they quickly may turn in on the new real value. Often such algorithms, in order to give a robust result in the long term, are not calibrated to be as quick as possible, but calibrated according to some kind of compromise between reliability and speed. Through the use of the present invention, estimation algorithms may thus be adapted for faster estimations, so that a correct value is obtained faster. Alternatively, an indication that the estimations are uncertain may also be sent to those functions using calculations where these estimations are included, such as functions carrying out driving resistance calculations, so that measures to make more robust decisions may be taken, e.g. in automated gear selection and speed control, until the estimations become reliable again.

**Brief list of figures**

The invention will be illustrated in more detail below, along with the enclosed drawings where similar references are used for similar parts, and where:

Figure 1 shows a flow chart for a method according to the invention,

Figure 2 shows a flow chart for one embodiment of the invention.

Figures 3a-d show simulation results,

Figure 4 shows a control device.

**Description of preferred embodiments**

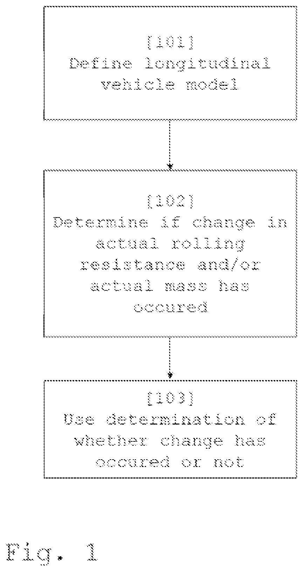

Figure 1 shows a flow chart for the method according to the present invention, where the method may be carried out by a system according to the present invention. At a first step 101 of the method, which may be carried out by a model unit, a longitudinal vehicle model is defined. The vehicle model comprises representations of forces with a horizontal action on the vehicle in valid driving conditions.

According to one embodiment of the present invention, the valid driving conditions consist of the driving conditions where the vehicle model is valid, i.e. it is a correct description of the vehicle. The vehicle model is valid when a turning force acting on the vehicle is negligible and when a traction force $F_{trac}$ acting on the vehicle is known. Since the turning force is negligible, substantially no side forces are acting on the vehicle, e.g. in the form of centrifugal-like forces when the vehicle is turning, in the valid driving conditions. The valid driving conditions, where the turning force is negligible, therefore comprise e.g. driving conditions where the vehicle is driven substantially straight forward, i.e. without turning. In the event of the valid driving conditions, substantially no extra friction forces related to turns impact on the vehicle, such extra friction forces arising e.g. for wheels in vehicles with several wheel pairs in the event of strong turns, e.g. by the wheels being dragged sideways which produces a greater ground friction. These extra friction forces typically arise for vehicles with several wheel pairs, such as vehicles with trailers or several wheel shafts.

The vehicle model is thus valid when side forces acting on the vehicle are negligible and where a traction force $F_{trac}$ acting on the vehicle is known. The traction force $F_{trac}$ constitutes, here and in this document, the total driving or braking force which impacts on the vehicle. The traction force $F_{trac}$ is e.g. known in driving conditions where the vehicle is driven by a driving force provided by a combustion engine, such as a petrol engine, a diesel engine or electric machinery, where the driving force is known. The traction force $F_{trac}$ is also known in driving conditions comprising braking with auxiliary brakes, for which the braking force is known, e.g. in the event of exhaust braking, retarder braking and/or braking through the use of a braking torque provided by electric machinery.

In a second step 102 of the method, it is determined, e.g. with the use of a determination device, whether a change has occurred in one or more of a representation of an actual rolling resistance force $F_{roll}^{act}$ and an actual mass $m^{act}$ for the vehicle. This determination includes a determination of whether the representations of the forces with horizontal impact on the vehicle cancel each other out, when an estimated mass $m^{est}$ and a representation of an estimated rolling resistance force $F_{roll}^{est}$ are introduced into the longitudinal vehicle model. Below is a more detailed description of how this determination may be carried out.

In a third step of the method 103, the determination of whether a change has occurred is used, e.g. by a using device. Through the present invention a quick detection of whether any of these parameters has changed significantly may be obtained, e.g. where the vehicle is reloaded or where the base changes.

According to one embodiment, this use of the determination of a change comprises a sending of an indication to systems which provide the estimated mass $m^{est}$ and the representation of the estimated rolling resistance force $F_{roll}^{est}$, that new estimations should be carried out. Thus, systems estimating the vehicle mass $m^{est}$ and/or the representation of the rolling resistance force $F_{roll}^{est}$ are called upon to carry out new estimations to ensure functions and/or performance for the functions which are controlled based on the vehicle's mass $m^{est}$ and/or the representation of the rolling resistance force $F_{roll}^{est}$. These systems will then, in response to this indication, estimate new values for the vehicle's mass $m^{est}$ and/or the representation of the rolling resistance force $F_{roll}^{est}$ and provide these to control systems where they are used as parameters. Thus algorithms which estimate these parameters may be speeded up or restarted, so that they may quickly turn in on the new and current value. Often such algorithms, in order to give a robust result in the long term, are not calibrated to be as quick as possible, but calibrated according to some kind of compromise between reliability and speed.

According to one embodiment of the present invention, these new estimations are carried out by defining a longitudinal vehicle model, so that it comprises representations of forces with horizontal impact on the vehicle in valid driving conditions. Subsequently, an estimated mass $m^{est}$ is determined for the vehicle, and a representation of an estimated rolling resistance force $F_{roll}^{est}$ which impacts on the vehicle is determined. The determination of the estimated mass $m^{est}$ and the representation of the estimated rolling resistance force $F_{roll}^{est}$ is based on a model for the longitudinal vehicle model, because the longitudinal vehicle model is used jointly with known values for the representations of the forces in the model, in order to minimise the model error. The model error constitutes the error which is obtained for the longitudinal vehicle model, when representations of known forces and the parameters to be estimated are introduced into the vehicle model. The estimated mass $m^{est}$ and the representation of the estimated rolling resistance force $F_{roll}^{est}$ may here be obtained by minimising this difference, the minimising being be carried out recursively by a least-squares algorithm. The estimated mass $m^{est}$ and the representation of the estimated rolling resistance force $F_{roll}^{est}$ are then used by control systems and other systems, using the vehicle mass $m^{est}$ and/or the representation of the rolling resistance force $F_{roll}^{est}$ as parameters in their calculations.

The concept of known values for the representations of the forces comprises, here and in this application, calculated values for the forces, which have been calculated based on measured parameters and/or assumptions about parameters related to the forces. Thus, according to the invention, the longitudinal vehicle model is used together with calculations of known values for the forces, based on measured and/or assumed parameters related to the representations of the forces in the model, in order to minimise the model error in the longitudinal vehicle model, when the parameters which are to be estimated and the known values for the representations of the forces are inserted into the model.

Where the vehicle is newly manufactured, or if e.g. the control device, which calculates the vehicle mass $m^{est}$ and the rolling resistance force $F_{roll}^{est}$, is replaced, there are no known values based on which estimations of e.g. the mass $m^{est}$ and the representation of the rolling resistance force $F_{roll}^{est}$ may be made. If known values are entirely missing, predetermined standard values are used for e.g. the mass $m^{est}$ and the representation of the rolling resistance force $F_{roll}^{est}$, in the situation where, for the very first time, more exact values are estimated for these. After values of e.g. the mass $m^{est}$ and the representation of the rolling resistance force $F_{roll}^{est}$ have been estimated for the very first time, the values which were obtained at the previous estimation are used. Thus successively more and more exact values are obtained of e.g. the mass $m^{est}$ and the representation of the rolling resistance force $F_{roll}^{est}$.

The invention according to the present invention, i.e. the quick detection of whether any of the parameters has been changed, may according to one embodiment be carried out only when estimations of the parameters, e.g. the mass $m^{est}$ and the representation of the rolling resistance force $F_{roll}^{est}$, have swung toward acceptable values for the parameters.

According to one embodiment, the use of the determination of whether a change has occurred, comprises a sending of an indication to systems using the estimated vehicle mass $m^{est}$ and/or the representation of the estimated rolling resistance force $F_{roll}^{est}$, that the estimated mass $m^{est}$ and/or the representation of the estimated rolling resistance force $F_{roll}^{est}$ are out of date. Thus, control systems and other systems using the vehicle mass $m^{est}$ and/or the representation of rolling resistance force $F_{roll}^{est}$ as parameters, are warned that the estimations are out of date and no longer reliable for purposes of calculations of e.g. the driving resistance force $F_{drivingres}$. These systems may then, in response to this indication, choose to ignore these out of date values for the vehicle mass $m^{est}$ and/or the representation of the rolling resistance force $F_{roll}^{est}$, or make decisions with such margins, that the out of date values impact the functions and/or the system to a lesser extent.

According to one embodiment of the present invention, the longitudinal vehicle model is based on Newton's second law, i.e. the so-called force equation.

If the vehicle model is valid, i.e. if pivotal forces/side forces acting on the vehicle are negligible, e.g. because the vehicle is not turning, and if a traction force $F_{trac}$ trac acting on the vehicle is known, the external forces which impact the vehicle are based on air resistance, rolling resistance and gravity due to road gradient.

These forces may be used to model the vehicle according to Newton's second law, where the representations of forces constitute forces in Newton's second law, so that the vehicle's longitudinal movement may be described as:

$$m \cdot a = F_{trac} - F_{air} - F_{slope} - F_{roll} \qquad \text{(equation 1)}$$

If

$$F_{air} = C_{air} \cdot v^2 ; \qquad \text{(equation 2)}$$

$$F_{roll} = m \cdot g \cdot C_r \text{ and} \qquad \text{(equation 3)}$$

$$F_{slope} = m \cdot g \cdot \sin\alpha ; \qquad \text{(equation 4)}$$

the equation 1 may be written as:

$$m \cdot a = F_{trac} - C_{air} \cdot v^2 - m \cdot g \cdot \sin\alpha - m \cdot g \cdot C_r ; \text{(equation 5)}$$

where

- $v$; is a vehicle speed, which may e.g. be measured with engine speed sensors on wheels or shafts;
- $a$; is a vehicle acceleration, which may be calculated based on the vehicle speed, or may be determined with the use of an accelerometer;
- $m$; is the total vehicle mass, which may be estimated, so that $m \cdot a$ constitutes a force;
- $g$; is the gravitational constant;
- $C_r$; is a rolling resistance coefficient, which may be estimated or assumed to be constant
- $C_{air}$; is an air resistance parameter, which may be estimated or assumed to be constant;
- $\alpha$; is a current road gradient, which may e.g. be measured with an accelerometer or obtained from GPS with map data;

- *Ftrac* is a traction force, which constitutes the total driving or braking current torque, converted into a total driving or braking external force with the help of gearings in the vehicle's driveline and wheel radius.

According to one embodiment of the present invention, the longitudinal vehicle model is based on Newton's second law for rotation speeds, inertias and torques, also called Newton's second law for rotation. Thus, the representations of forces with horizontal impact are here based on these rotation speeds, inertias and torques. Torques and speeds in the driveline depend, for purposes of Newton's second law for rotation, on a selection of a reference point in the driveline, i.e. at which point in the driveline the torque equilibrium is calculated, due to the driveline's gearings in e.g. the gearbox.

For a reference point at the vehicle's wheels, the vehicle's longitudinal movement may be expressed as:

$$m \cdot \mathrm{r}_{wheel}^2 \cdot \dot{\omega}_{wheel} = T_{trac} - T_{resistance} \qquad \text{(equation 6)}$$

where

- *m;* is the total vehicle mass, which is estimated;

- *rwheel;* is a wheel radius for the vehicle's wheels;

- $\dot{\omega}_{wheel}$ is the angular acceleration for the current reference point, i.e. for the vehicle's wheel shaft where the reference point in equation 6 is at the vehicle's wheels. The angular acceleration $\dot{\omega}_{wheel}$ may for example be calculated with a derivative of the signal from a speed sensor placed somewhere along the driveline, if the gearings between the sensor's position and the reference point are known. In many vehicles, e.g. in modern trucks, there is often a speed sensor on the engine and after the gearbox. Vehicles with some form of automated shifting system often also have sensors in the gearbox.

- *Ttrac* is a total traction torque, which constitutes the total driving or braking torque applied at the current reference point, i.e. to the vehicle's wheels for equation 6; and

- $T_{resistance}$ is a total driving resistance torque, which at the reference point at the vehicle's wheels consists of the driving resistance forces $F_{air}$, $F_{slope}$ and $F_{roll}$ multiplied by the wheel radius $r_{wheel}$ as follows:
$T_{resistance} = (F_{air} + F_{slope} + F_{roll}) \cdot r_{wheel}$, where $F_{air}$, $F_{slope}$ and $F_{roll}$ are defined as described above in equations 2-4.

For Newton's second law for rotation, the traction torque $T_{trac}$ depends on the placement of the reference point for balance, since the traction torque $T_{trac}$ is a sum of the torques that impact different points along the driveline. Different actuators in the vehicle add torque at different places in the driveline, which means that the torques must be scaled with any gear ratios and efficiencies between the point where the torques affect the driveline and the reference point, when the total traction torque $T_{trac}$ in the reference point is to be calculated. For example, the engine's torque operates before the gearbox while a retarder circuit torque operates after the gearbox, which means that different gearings are used for the engine and the retarder circuit, respectively, when the total traction torque $T_{trac}$ is calculated. The driving resistance torque $T_{resistance}$ needs to be scaled for different reference points because of gearings along the driveline.

A person skilled in the art will realise that the traction torque $T_{trac}$ is changed by gearings along the driveline and/or that the driving resistance torque $T_{resistance}$ may need to be scaled along the driveline, from the engine to the vehicle's wheels, and that the equation 6 applies generally to all different reference points along the driveline, while the expressions for traction torque $T_{trac}$ and/or the driving resistance torque $T_{resistance}$ have different appearances and different scaling for different reference points.

The speed sensor's placement also impacts the balance and thus an appearance of the balance expression, since the engine speed must also be rescaled to the relevant reference point. If the speed sensor is placed between the engine and the reference point, for which the balance is calculated, the torque balance, and thus the vehicle model, may generally be described as:

$$m \cdot rwheel2/nwheelToRef2 \cdot \omega sensor/nsensorToRef$$

$$= Ttrac - Tresistance/nwheelToRef$$

$$\text{(equation 7)}$$

where

- *m;* is the total vehicle mass, which is estimated;
- *rwheel;* is the vehicle's wheel radius;
- $\dot{\omega}$sensor; is an angular acceleration for a given position for the speed sensor;
- *Ttrac* is a total traction torque; and
- $T_{resistance}$ is a total driving resistance torque; $T_{resistance}= (F_{air} + F_{slope} + F_{roll}) \cdot r_{wheel'}$ , where $F_{air}$, $F_{slope}$ and $F_{roll}$ are defined in the manner described above in equations 2-4;
- $n_{sensorToRef}$ is a gear ratio between the speed sensor and the reference point, including potential losses in the gears; and
- $n_{wheelToRef}$ is a gear ratio between the wheels and the reference point, including potential losses in the gears.

If the speed sensor is placed, instead, between the reference point, for which the balance is calculated, and the wheels, the torque balance, and thus the vehicle model, may generally be described as:

$$m \cdot r_{wheel}^2/n_{wheelToRef}^2 \cdot \dot{\omega}_{sensor} \cdot n_{sensorToRef} = T_{trac} - T_{resistance}/n_{wheelToRef}$$

$$(equation\ 8)$$

where

- *m;* is the total vehicle mass, which is estimated;
- *rwheel;* is the vehicle's wheel radius;
- $\dot{\omega}$sensor; is an angular acceleration for a given position for the speed sensor;
- *Ttrac* is a total traction torque; and
- $T_{resistance}$ is a total driving resistance torque; $T_{resistance}= (F_{air} + F_{slope} + F_{roll}) \cdot r_{wheel'}$ , where $F_{air}$, $F_{slope}$ and $F_{roll}$ are defined in the manner described above in equations 2-4;
- $n_{sensorToRef}$ is a gear ratio between the speed sensor and the reference point, including potential losses in the gears; and
- $n_{wheelToRef}$ is a gear ratio between the wheels and the reference point, including potential losses in the gears.

Where the longitudinal vehicle model is based on Newton's second law for rotation, the representations of the forces are thus equivalent to torques, i.e. the traction force $F_{trac}$ is equivalent to the traction torque $T_{trac}$ and the driving resistance force $F_{drivingres}$ is equivalent to the driving resistance torque $T_{resistance}$. Thus, the rolling resistance force $F_{roll}$ is equivalent to the rolling resistance torque $T_{roll}$, the air resistance force $F_{air}$ is equivalent to the air resistance torque $T_{air}$ and a force caused by the road's gradient $F_{slope}$ is equivalent to a torque caused by the road's gradient $T_{slope}$. The acceleration *a* is equivalent to the angular acceleration $\dot{\omega}$.

Below is a description of how change detection is carried out, where Newton's second law based on forces is used for the vehicle model, i.e. based on equation 5, so that the representations of the forces constitute the forces with horizontal effect according to the vehicle model. A similar change detection may also be carried out, where Newton's second law based on rotation is used as a vehicle model, so that the representations of the forces constitute rotation speeds, inertias and torques, as described above. In other words, the change detection may also be carried out based on any of equations 6-8. A person skilled in the art may, with the help of the above description of Newton's second law for rotation, derive method steps and/or expressions corresponding to the change detection described below also for Newton's second law for rotation.

If for the time being, at the time step *n*, available values from measurements and estimations are inserted into equation 5, the following equation is obtained:

$$y[n] = F_{trac}[n] - C_{air} \cdot v[n]^2 - m \cdot g \cdot \sin\alpha[n] - m \cdot g \cdot C_r - m \cdot a[n]$$
$$(equation\ 9)$$

Through equation 9, a longitudinal vehicle model is obtained, the output signal *y[n] of* which should ideally create noise around zero when the vehicle model describes a valid condition, i.e. when the total driving or braking force is known, and everything is correctly estimated. Such a model is usually called a residual in signal processing theory.

This is used by the present invention, which determines whether forces with horizontal effect on the vehicle cancel each other out, i.e. if the residual in equation 9 has the value zero when an estimated mass $m^{est}$ and a representation of an estimated rolling resistance force $F_{roll}^{est}$ are introduced into the longitudinal vehicle model. This gives a very exact determination of whether a change has occurred to the actual rolling resistance force $F_{roll}^{act}$, e.g. through change of base between asphalt and gravel, and/or to an actual mass $m^{act}$ for the vehicle, e.g. when reloading.

According to one embodiment of the present invention, it is determined whether a change of the actual rolling resistance force $F_{roll}^{act}$, and/or the actual mass $m^{act}$ and/or the actual air resistance parameter $C_{air}^{act}$ for the vehicle has occurred. At this determination, an analysis of the longitudinal force equation in equation 5, with the estimated mass $m^{est}$, the representation of the estimated rolling resistance force $F_{roll}^{est}$ and the estimated air resistance parameter $C_{air}^{est}$ introduced into the longitudinal vehicle model, i.e. to equation 9, is carried out. Subsequently, the residual is analysed, i.e. a determination is carried out, regarding whether the representation of the forces with horizontal effect on the vehicle cancel each other out, so that the residual has the value zero. This embodiment may thus identify that a change has occurred in one or several of the representation of the actual rolling resistance force $F_{roll}^{act}$, and/or the actual mass $m^{act}$ and/or the actual rolling resistance parameter $C_{air}^{act}$. If, for example, the representation of the actual rolling resistance force $F_{roll}^{act}$ and the actual mass $m^{act}$ remain unchanged, this therefore means that a change of the actual air resistance parameter $C_{air}^{act}$ for the vehicle has been identified, which may be used by a large number of functions in the vehicle, e.g. when calculating driving resistance in control systems for gear selection and for cruise control with map data and GPS.

Changes in the actual road gradient may also be detected with the use of one embodiment of the invention. Here, it may be determined if a change in one or several of the representations of the actual rolling resistance force $F_{roll}^{act}$, the actual mass $m^{act}$ and an actual road gradient $\alpha^{act}$ which the vehicle experiences, have occurred. In connection with this determination, the estimated mass $m^{est}$, the representation of the estimated rolling resistance force $F_{roll}^{est}$ and the estimated road gradient $\alpha^{est}$ are introduced into the longitudinal vehicle model, and subsequently it is analysed whether the representation of the forces in the vehicle model cancel each other out, i.e. whether the residual in equation 9 obtains the value zero. Through this embodiment, it may be determined whether a change has occurred for one or several of the representations of the actual rolling resistance force $F_{roll}^{act}$, the actual mass $m^{act}$ and an actual road gradient $\alpha^{act}$. If, for example, both the representation of the actual rolling resistance force $F_{roll}^{act}$ and the actual *mass* $m^{act}$ remains unchanged, a change for the actual road gradient $\alpha^{act}$ for a road section where the vehicle is located may be identified, which may be used by a large number of functions in the vehicle, e.g. in control systems for gear selection and cruise control.

According to one embodiment of the invention, it is determined whether a change in one or several of the representations of the actual rolling resistance force $F_{roll}^{act}$, the actual mass $m^{act}$ and the actual air resistance parameter $C_{air}^{act}$, and the actual road gradient $\alpha^{act}$ has occurred. In connection with this estimation, the estimated mass $m^{est}$, the representation of the estimated rolling resistance force $F_{roll}^{est}$, the estimated air resistance parameter $C_{air}^{est}$ and the estimated road gradient $\alpha^{est}$ are introduced into the longitudinal vehicle model. Subsequently, the representation of the forces is analysed to see whether the representation of the forces with horizontal effect on the vehicle cancel each other out, i.e. whether the model's residual has the value zero. Thus, a simultaneous control is obtained of whether any of the representation of the rolling resistance force $F_{roll}^{act}$, the air resistance parameter $C_{air}^{act}$, the road gradient $\alpha^{act}$ and the mass $m^{act}$ has changed.

As described above, the determination of whether the representation of the longitudinal forces acting on the vehicle cancel each other out, may be carried out with the use of a residual-based detection.

According to one embodiment of the present invention, the residual-based detection comprises a summation over time of a residual signal $y[n]$, e.g. of the residual signal $y[n]$ in equation 9. This summation may also be seen as an integration of the model error over time.

The summation may comprise a calculation of at least one accumulated value $g_1[n]$, $g_2[n]$, $g_3[n]$ which is accumulated when the residual signal $y[n]$ has a value which exceeds an operational constant $d$. In other words, the value of the sum increases only when the residual signal $y[n]$ is larger than the operational constant $d$. The calculations and implications of the at least one accumulated value $g_1[n]$, $g_2[n]$, $g_3[n]$ are described in more detail below.

Subsequently, a change in the actual values may be determined if one or several of the accumulated values $g_1[n]$, $g_2[n]$, $g_3[n]$ exceed a threshold value $h$. The size of the threshold value $h$ determines how fast and reliably the decision should be taken, that a change has occurred. A smaller value of the threshold value $h$ produces a fast but less reliable decision, and a greater value of the threshold value $h$ produces a slower, but more reliable decision. The threshold value $h$ may thus be adjusted so that the speed and reliability suit the one or several systems using the parameters for which changes are to be detected.

According to one embodiment of the present invention, the residual-based detection comprises a normalisation of a residual signal $y[n]$, so that a normalised residual signal $y_{norm}[n]$ is normally distributed with an average value equal to zero, $y_{norm}[n]=0$, and with a standard deviation equal to one, $\sigma(y_{norm})=1$. This normalisation simplifies a calibration of the operational constant $d$ and of the threshold value $h$ in connection with the subsequent summation, since the output signal of the residual $y[n]$ may have different statistical features, i.e. different average values and standard deviations, for different vehicles and/or at different times. If the vehicle is driven on e.g. an uneven gravel road, the speed and gradient signals may make more noise than if the vehicle is driven on an even and smooth motorway. In order to have, despite these dissimilarities, the same calibration of the operational constant $d$ and of the threshold value $h$ for all vehicles, the residual's output signal $y[n]$ is normalised, so that it is normally distributed, with an average value of zero and a standard deviation of one.

The normalisation is carried out by calculating an average value, $\bar{y}$, and a standard deviation, $\sigma(y)$, for the residual's output signal $y[n]$, based on all the output signals of the residual since the most recent trigger, and by subsequently calculating $y_{norm}$ as follows:

$$y_{norm} = \frac{y[n]-\bar{y}}{\sigma(y)}). \qquad\qquad \text{(equation 10)}$$

The average value and the standard deviation may be calculated recursively here, so that they only need to be updated with the most recent value. This means that the memory requirement is reduced, since not all the values since the most recent decision need to be saved in a memory, in connection with the recursive calculation.

The above-mentioned summation over time of the residual may also be carried out on the normalised residual signal $y_{norm}[n]$. The accumulated values $g_1[n]$, $g_2[n]$, $g_3[n]$, are then calculated, which are accumulated when the normalised residual signal $y_{norm}[n]$ exceeds the operational constant $d$. Changes in the actual values may then be determined, if one or more of the accumulated values $g_1[n]$, $g_2[n]$, $g_3[n]$ exceed the threshold value $h$. This may be seen as a trigger for something having occurred. Summing up values that exceed the operational constant $d$ in this manner, and subsequently triggering when the threshold value $h$ is reached for the sum, may be named a CUSUM trigger (CUmulative SUM).

Hereafter the residual-based detection which uses the normalised residual signal $y_{norm}[n]$ will be described and exemplified in more detail. A person skilled in the art will realise that the same applies also to the residual-based detection which uses the above described non-normalised residual signal $y[n]$.

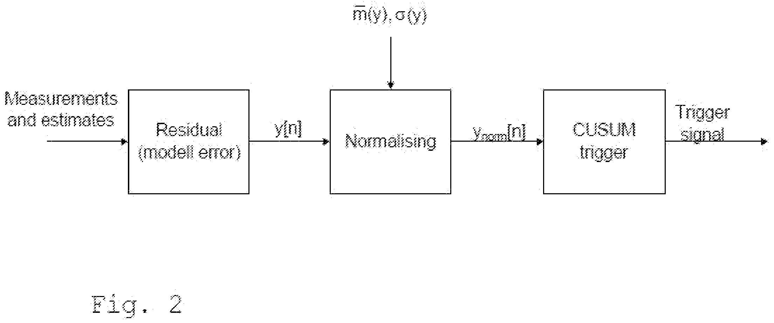

The residual-based detection which uses the normalised residual signal $y_{norm}[n]$ is displayed in a flow chart in Figure 2, where the residual $y[n]$, i.e. equation 9, is first calculated for valid driving conditions based on estimations and measurements from the time step $n$.

Average value and standard deviations for the residual $y[n]$ are calculated based on all time steps, from the most recent trigger up to the current time step. Subsequently, the residual $y[n]$ is normalised with the average value and standard deviation to obtain the normalised residual $y_{norm}[n]$. The sums $g_1[n]$, $g_2[n]$, or $g_3[n]$ are calculated in the CUSUM trigger.

If any of the sums $g_1[n]$, $g_2[n]$, or $g_3[n]$ becomes greater than the threshold value $h$, this is used in the vehicle by:

- Providing information that the CUSUM trigger has tripped.

- Resetting the sums $g_1[n]$ and $g_2[n]$, or $g_3[n]$.

- Starting over the calculation of average value and standard deviation.

- Starting over the method according to the present invention.

The method restarts even if none of the sums $g_1[n]$ and $g_2[n]$, or $g_3[n]$ becomes greater than the threshold value $h$.

Summing up values that exceed the operational constant $d$ in this manner, and subsequently trigger when the threshold value $h$ is reached for the sum, which is used by this embodiment of the invention, is very useful to detect changes in noisy signals. This method provides a notification of the cases where the noisy normalised signal $y_{norm}$ begins to deviate from the normal value, which may otherwise be very difficult to establish for noisy signals.

The method which uses the CUSUM trigger constitutes mainly a summation of the noisy value. If it is noisy ideally around zero, a summation over time would also amount to zero. Since the world is not ideal, a small value, the operational constant $d$, is deducted at each time step in order to avoid that a small deviation sums up. The operational constant $d$ also makes the sum "empty" itself, if it has first been counted up slightly when the input signal is different from zero, but where the input signal subsequently remains around the value zero again. The sums are saturated downwards with zero in order to be separated. The summation for each approved time step $n$ may be written as:

$$g_1[n] = \max(g_1[n-1] + y_{norm}[n] - d, 0) \qquad \text{(equation 11)}$$

and:

$$g_2[n] = \max(g_2[n-1] - y_{norm}[n] - d, 0) \qquad \text{(equation 12)}$$

Based on equations 11 and 12, it is possible to differentiate the direction in which the noise deviates.

If it is not important to know in which direction the noise deviates, the summation may be limited to a summation comprising the absolute amount of the noisy normalised signal $y_{norm}$, which means fewer calculations:

$$g_3[n] = \max(g_3[n-1] + |y_{norm}[n]| - d, 0), \qquad \text{(equation 13)},$$

the sum $g_3[n]$ being used for the CUSUM trigger in the same manner as described above for the sums $g_1[n]$ and $g_2[n]$. Thus, in the CUSUM trigger, the sums $g_1[n]$ and $g_2[n]$ may be used for the comparison with the threshold value $h$, if the sums $g_1[n]$ and $g_2[n]$ have been calculated. Similarly, the sum $g_3[n]$ may be used for the comparison with the threshold value $h$, if the sum $g_3[n]$ has been calculated.

Finally, a threshold level $h$ is set for how large the summed up value $g_x[n]$ may become before the trigger is tripped.

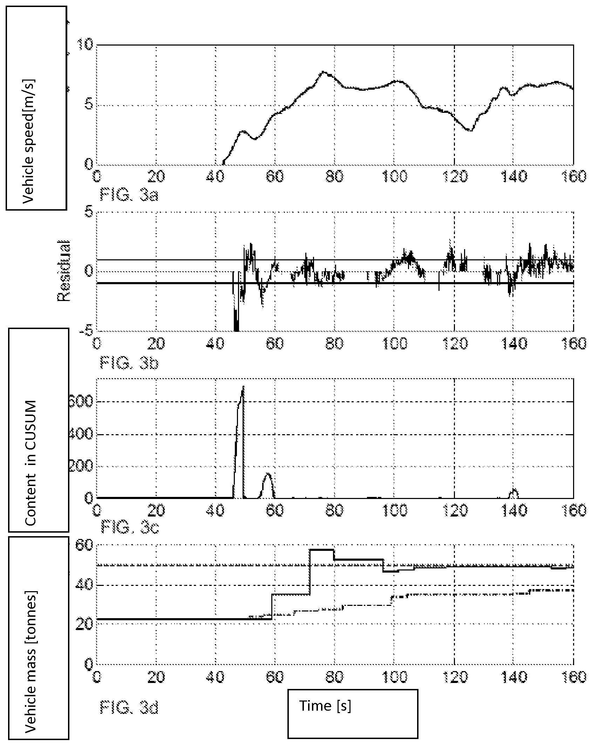

A non-limiting example of when the present invention is used in connection with reloading detection, i.e. in connection with detection of a change of an actual mass $m^{act}$ for the vehicle may be viewed in Figures 3a-d.

Figure 3a shows the vehicle speed. The truck has been standing still and weighs 24 tonnes. Subsequently, a trailer is loaded, which causes the truck to weigh 50 tonnes when it drives off.

Figure 3b shows a noisy, normalised residual $y_{norm}[n]$ and the two thick black lines show the level for the operational constant $d$. When the vehicle drives off just after 40 seconds, it is clearly visible how the normalised residual $y_{norm}[n]$ ends up outside the level of the operational constant $d$, so that the sum is then integrated. The sum is thus counted up, since the estimated vehicle mass $m^{est}$ now differs considerably from the actual mass $m^{act}$, which may be viewed in Figure 3d, where the actual mass $m^{act}$ 50 tonnes is dashed and the estimated vehicle mass $m^{est}$, which is displayed with a solid line, is a little over 20 tonnes. The sum therefore begins to increase in value, as displayed in Figure 3c.

When the sum reaches the threshold value $h$, which in this case is set at 700, at the time of 50 seconds the method will indicate to e.g. a mass estimation algorithm that it should restart, and the sum will then empty itself again. The indication leads to the mass estimation algorithm starting over, so that it may arrive at the actual mass $m^{act}$ 50 tonnes faster, which is displayed in Figure 3d, where the solid curve shows the invention with restarted mass estimation and the dashed curve shows prior art technology, i.e. that the same mass estimation method is used, but is not restarted according to the invention. The prior art technology arrives at the actual mass $m^{act}$ 50 tonnes (dashed line) much more slowly, as displayed in Figure d.

Detection of a change of one or several of the representations of the actual rolling resistance force $F_{roll}^{act}$, the actual air resistance parameter $C_{air}^{act}$ and the actual road gradient $\alpha^{act}$ may be displayed with similar simulations as those in Figures 3a-d.

A person skilled in the art will realise that a method for management of a change in actual values for parameters that impact the driving resistance force $F_{drivingres}$ for a vehicle, according to the present invention, may also be implemented in a computer program which, when executed in a computer, achieves that the computer carries out the method. The computer program usually consists of a part of a computer program product 403, where the computer program product comprises a suitable digital storage medium on which the computer program is stored. Said computer readable medium consists of a suitable memory, e.g.: ROM (Read-Only Memory), PROM (Programmable Read-Only Memory), EPROM (Erasable PROM), Flash, EEPROM (Electrically Erasable PROM), a hard disk device, etc.

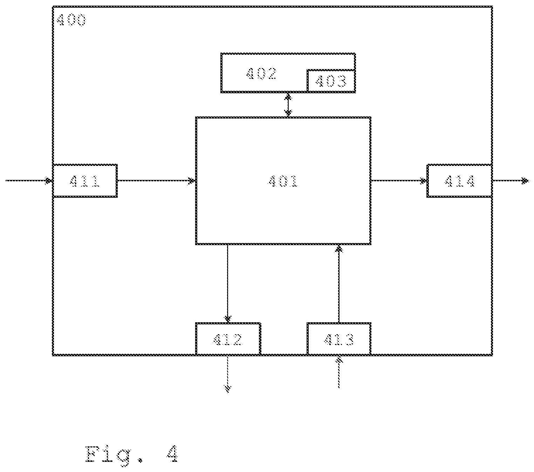

Figure 4 schematically shows a control device 400. The control device 400 comprises a calculation device 401, which may consist of essentially a suitable type of processor or microcomputer, e.g. a circuit for digital signal processing (Digital Signal Processor, DSP), or a circuit with a specific function (Application Specific Integrated Circuit, ASIC). The calculation device 401 is connected to a memory unit 402 installed in the control device 400, which provides the calculation device 401 with e.g. the stored program code and/or the stored data, which the calculation device 401 needs in order to be able to carry out calculations. The calculation device 401 is also set up to store interim or final results of calculations in the memory device 402.

Further, the control device 400 is equipped with devices 411, 412, 413, 414 for receiving and sending of input and output signals. These input and output signals may contain wave shapes, pulses, or other attributes, which by the devices 411, 413 for the receipt of input signals may be detected as information, and may be converted into signals that may be processed by the calculation device 401. These signals are then provided to the calculation device 401. The devices 412, 414 for sending of output signals are arranged to transform signals received from the calculation device 401 for the creation of output signals by e.g. modulating the signals, which may be transmitted to other parts of the system and/or the vehicle.

Each one of the connections to the devices for receiving and sending of input and output signals may consist of one or several of a cable; a data bus, such as a CAN (Controller Area Network) bus, a MOST (Media Oriented Systems Transport) bus, or any other bus configuration; or of a wireless connection.

A person skilled in the art will realise that the above-mentioned computer may consist of the calculation device 401 and that the above-mentioned memory may consist of the memory device 402.

Generally, control systems in modern vehicles consist of a communications bus system, consisting of one or several communications buses to connect a number of electronic control devices (ECUs), or controllers, and different components localised on the vehicle. Such a control system may comprise a large number of control devices, and the responsibility for a specific function may be distributed among more than one control device. Vehicles of the type shown thus often comprise significantly more control devices than what is shown in Figure 4, which is well known to a person skilled in the art within the technology area.

The present invention is implemented in the embodiment displayed in the control device 400. The invention may, however, also be implemented wholly or partly in one or several other control devices already existing in the vehicle, or in a control device dedicated to the present invention.

According to one aspect of the present invention, a system is provided for the management of changes in actual values, for parameters impacting the driving resistance $F_{drivingres}$ for the vehicle.

The system comprises a model device, arranged to define the above described longitudinal vehicle model, where the model comprises representations of forces with horizontal effect on the vehicle in one of the above-mentioned valid driving conditions.

The system also comprises a determination device, arranged to determine whether a change in one or several of a representation of an actual rolling resistance force $F_{roll}^{act}$ and an actual mass $m^{act}$ for the vehicle have occurred. The determination device is arranged to determine whether the representations of the forces with horizontal effect on the vehicle cancel each other out, when an estimated mass $m^{est}$ and a representation of an estimated rolling resistance force $F_{roll}^{est}$ are introduced into the vehicle model.

The system also comprises a utility device, arranged to use the determination of whether or not a change has occurred. As described above, this utilisation may comprise indications to systems that new estimations should be carried out and/or that the estimated mass $m^{est}$ and the representation of the estimated rolling resistance force $F_{roll}^{est}$ are out of date.

According to one embodiment of the invention the system is arranged as described above, in order to be able to determine whether a change in one or several of the representation of the actual rolling resistance force $F_{roll}^{act}$, the actual mass $m^{act}$ and an actual air resistance parameter $C_{air}$ for the vehicle have occurred.

According to one embodiment of the invention the system is arranged in the manner described above, in order to be able to determine whether a change in one or several of the representations of the actual rolling resistance force $F_{roll}^{act}$, and the actual mass $m^{act}$ for the vehicle, and an actual road gradient $\alpha^{act}$ experienced by the vehicle have occurred. According to one embodiment of the invention the system is arranged in the manner described above, in order to be able to determine whether a change in one or several of the representations of the actual rolling resistance force

$F_{roll}^{act}$, the actual mass $m^{act}$ and an actual air resistance parameter $C_{air}^{act}$ for the vehicle, and an actual road gradient $\alpha^{act}$ experienced by the vehicle have occurred.

A person skilled in the art will also realise that the above system may be modified according to the different embodiments of the method according to the invention, as specified by the system's non-independent patent claims below.

In addition, the invention pertains to a motor vehicle, e.g. a truck or a bus, comprising at least one system for the management of a change in actual values for parameters impacting a driving resistance force $F_{drivingres}$ for a vehicle according to the invention.

The present invention is not limited to the embodiments of the invention described above, but pertains to and comprises all embodiments within the protected scope of the enclosed independent claims.

**Claims**

1. Method for the management of a change in actual values for parameters impacting a driving resistance force $F_{drivingres}$ for a vehicle, comprising:

   - a definition, by way of a model unit, of a longitudinal vehicle model, comprising representations of forces with horizontal impact on said vehicle in a valid driving mode;
   - a determination, with a determination device, of whether a change in one or several of a representation of the actual rolling resistance force $F_{roll}^{act}$, and an actual mass $m^{act}$ for said vehicle has occurred, **characterised in that** said determination comprises a determination of whether said representations of forces with horizontal impact on said vehicle cancel each other out when an estimated mass $m^{est}$ and a representation of an estimated rolling resistance force $F_{roll}^{est}$ and known values for said representations of forces in said longitudinal vehicle model are inserted in said longitudinal vehicle model, wherein said known values for said representations of said forces comprise calculated values for said representations of said forces, which have been calculated based on measured parameters and/or assumptions about parameters which are related to said representations of said forces; and
   - a utilisation, with a utilisation device, of said determination of whether said change has occurred in vehicle systems adapted for automatic gear selection or cruise control,

   wherein said determination as to whether said representations of said forces cancel each other out is carried out with the use of a residual-based detection.

2. Method according to claim 1, wherein a determination of whether a change in one or several of said representations of said actual rolling resistance force $F_{roll}^{act}$, said actual mass $m^{act}$, and an actual air resistance parameter $C_{air}^{act}$ for said vehicle has occurred is carried out, said determination comprising a determination of whether said representations of said forces with horizontal impact on said vehicle cancel each other out when said estimated mass $m^{est}$, said representation of said estimated rolling resistance force $F_{roll}^{est}$ and an estimated air resistance parameter $C_{air}^{est}$ are introduced into said longitudinal vehicle model.

3. Method according to any of claims 1-2, wherein a determination of whether a change in one or several of said representations of said actual rolling resistance force $F_{roll}^{act}$, and said actual mass $m^{act}$ for said vehicle, and an actual road gradient $\alpha^{act}$ experienced by said vehicle has occurred, is carried out, said determination comprising a determination of whether said representations of said forces with horizontal impact on said vehicle cancel each other out when said estimated mass $m^{est}$, said representation of said estimated rolling resistance force $F_{roll}^{est}$ and an estimated road gradient $\alpha^{est}$ are introduced into said longitudinal vehicle model.

4. Method according to any of claims 1-3, wherein a determination of whether a change in one or several of said representations of said actual rolling resistance force $F_{roll}^{act}$, said actual mass $m^{act}$ and an actual air resistance parameter $C_{air}^{act}$ for said vehicle, and an actual road gradient $\alpha^{act}$ experienced by said vehicle has occurred, is carried out, said determination comprising a determination of whether said representations of said forces with horizontal impact on said vehicle cancel each other out when said estimated mass $m^{est}$, said representation of said estimated rolling resistance force $F_{roll}^{est}$, an estimated air resistance parameter $C_{air}^{est}$ and an estimated road gradient $\alpha^{est}$ are introduced into said longitudinal vehicle model.

5. Method according to any of claims 1-4, wherein said longitudinal vehicle model is based on Newton's second law of force, wherein said representations of said forces with horizontal effect are based on said forces.

6. Method according to any of claims 1-5, wherein said longitudinal vehicle model is described by the equation:

$$m \cdot a = F_{trac} - C_{air} \cdot v^2 - m \cdot g \cdot \sin\alpha - m \cdot g \cdot C_r;$$

where

- $v$ is a vehicle speed;
- $a$ is a vehicle acceleration;
- $m$ is a total vehicle mass;
- $g$ is the gravitational constant;
- $C_r$ is a rolling resistance coefficient;
- $C_{air}$ is an air resistance parameter;
- $\alpha$ is a current road gradient;
- $F_{trac}$ is a traction force.

7. Method according to any of claims 1-4, wherein said longitudinal vehicle model is based on Newton's second law applied to rotation speeds, inertias and torques, wherein said representations of said forces with horizontal effect are based on said rotation speeds, inertias and torques.

8. Method according to claim 7, wherein, if a utilised speed sensor is placed between an engine in said vehicle and a reference point for which said longitudinal vehicle model is established, said longitudinal vehicle model is described by the equation:

$$m \cdot r_{wheel}^2 / n_{wheelToRef}^2 \cdot \dot{\omega}_{sensor} / n_{sensorToRef} = T_{trac} - T_{resistance} / n_{wheelToRef}$$

where

- $m$ is the total vehicle mass;
- $r_{wheel}$ is a wheel radius for said vehicle;
- $\omega_{sensor}$ is an angular acceleration for a current position for said speed sensor;
- $T_{trac}$ is a total traction torque;
- $T_{resistance}$ is a total driving resistance torque;
- $n_{sensorToRef}$ is a gear ratio between said speed sensor and said reference point; and
- $n_{wheelToRef}$ is a gear ratio between one or several vehicle wheels and said reference point.

9. Method according to claim 7, wherein, if a utilised speed sensor is placed between a reference point for which said longitudinal vehicle model is established, and at least one vehicle wheel, said longitudinal vehicle model is described by the equation:

$$m \cdot r_{wheel}^2 / n_{wheelToRef}^2 \cdot \dot{\omega}_{sensor} \cdot n_{sensorToRef} = T_{trac} - T_{resistance} / n_{wheelToRef}$$

where

- $m$ is the total vehicle mass;
- $r_{wheel}$ is a wheel radius for said vehicle;
- $\omega_{sensor}$ is an angular acceleration for a current position for said speed sensor;
- $T_{trac}$ is a total traction torque;
- $T_{resistance}$ is a total driving resistance torque;
- $n_{sensorToRef}$ is a gear ratio between said speed sensor and said reference point; and
- $n_{wheelToRef}$ is a gear ratio between one or several vehicle wheels and said reference point.

10. Method according to any of claims 1-9, wherein said utilisation of said determination as to whether said change has occurred comprises one or several in the group of:

- an indication to systems providing said estimated mass $m^{est}$ and/or said representation of said estimated rolling resistance force, $F_{roll}^{est}$ that new estimations should be carried out; and
- an indication to systems using said estimated mass $m^{est}$ and said representation of said estimated rolling resistance force, $F_{roll}^{est}$ that said estimated mass $m^{est}$ and said representation of said estimated rolling resistance force $F_{roll}^{est}$ are out of date.

11. Computer program comprising a program code which, when said program code is executed in a computer, is adapted to achieve that said computer can carry out the method according to any of claims 1-10.

12. Computer program product comprising a computer-readable medium and a computer program according to patent claim 11, said computer program being comprised in said computer-readable medium.

13. System for the management of a change in actual values for parameters impacting a driving resistance force $F_{drivingres}$ for a vehicle, comprising:

- a model unit arranged to define a longitudinal vehicle model, comprising representations of forces with horizontal impact on said vehicle in a valid driving mode;
- a determination device arranged to determine whether a change in one or several of a representation of an actual rolling resistance force $F_{roll}^{act}$ and an actual mass $m^{act}$ for said vehicle has occurred, **characterised in that** said determination device is arranged to determine whether said representations of said forces with a horizontal impact on said vehicle cancel each other out when an estimated mass $m^{est}$ and a representation of an estimated rolling resistance force $F_{roll}^{est}$ are introduced into said longitudinal vehicle model; and
- a utilisation device is arranged to use said determination of whether said change has occurred, wherein said determination as to whether said representations of said forces cancel each other out is carried out with use of a residual-based detection.

14. Motor vehicle comprising a system according to claim 13.

**Patentansprüche**

1. Verfahren zur Verwaltung einer Änderung der tatsächlichen Werte von Parametern, die die Fahrwiderstandskraft $F_{drivingres}$ eines Fahrzeugs beeinflussen, umfassend:

- eine Definition eines Fahrzeug-Längsmodells mittels einer Modelleinheit, die Darstellungen von waagrecht auf ein Fahrzeug einwirkenden Kräften in einem gültigen Fahrmodus aufweist;
- eine Bestimmung mittels einer Bestimmungseinrichtung, ob eine Änderung einer oder mehrerer Darstellungen der tatsächlichen Rollwiderstandskraft $F_{roll}^{act}$ und einer tatsächlichen Masse $m^{act}$ des Fahrzeugs stattgefunden hat,

**dadurch gekennzeichnet, dass**

die Bestimmung eine Bestimmung aufweist, ob die Darstellungen waagrecht auf das Fahrzeug einwirkende Kräfte einander aufheben, wenn eine geschätzte Masse $m^{est}$ und eine Darstellung einer geschätzten Rollwiderstandskraft $F_{roll}^{est}$ sowie bekannte Werte für die Darstellungen der Kräfte in diesem Fahrzeug-Längsmodell in das Fahrzeug-Längsmodell eingefügt werden, wobei die bekannten Werte für die Darstellungen der Kräfte berechnete Werte für die Darstellungen der Kräfte aufweisen, die auf Basis gemessener Parameter und/oder Annahmen über Parameter, die mit den Darstellungen der Kräfte in Beziehung stehen, berechnet worden sind; und

- eine Nutzung mittels einer Nutzungseinrichtung der Bestimmung, ob die Änderung in Fahrzeugsystemen stattgefunden hat, die zur automatischen Gangwahl oder Geschwindigkeitsregelung eingerichtet sind,

wobei die Bestimmung, ob die Darstellungen der Kräfte einander aufheben, mittels einer residuenbasierten Detektion erfolgt.

2. Verfahren nach Anspruch 1, wobei eine Bestimmung erfolgt, ob eine Änderung einer oder mehrerer der Darstellungen der tatsächlichen Rollwiderstandskraft $F_{roll}^{act}$, der tatsächlichen Masse $m^{act}$ und des tatsächlichen Luftwiderstandparameters $C_{air}^{act}$ des Fahrzeugs stattgefunden hat, wobei die Bestimmung eine Bestimmung umfasst, ob die Darstellungen der waagrecht auf das Fahrzeug einwirkenden Kräfte einander aufheben, wenn die geschätzte Masse $m^{est}$, die Darstellung der geschätzten Rollwiderstandskraft $F_{roll}^{est}$ und eines geschätzten Luftwiderstandparameters $C_{air}^{act}$ in das Fahrzeug-Längsmodell eingesetzt werden.

3. Verfahren nach einem der Ansprüche 1 bis 2, wobei eine Bestimmung erfolgt, ob eine Änderung einer oder mehrerer der Darstellungen der tatsächlichen Rollwiderstandskraft $F_{roll}^{act}$ und der tatsächlichen Masse $m^{act}$ des Fahrzeugs sowie des vom Fahrzeug festgestellten tatsächlichen Straßengradienten $\alpha^{act}$ stattgefunden hat, wobei die Bestimmung eine Bestimmung umfasst, ob die Darstellungen dieser waagrecht auf das Fahrzeug einwirkenden Kräfte einander aufheben, wenn die geschätzte Masse $m^{est}$, die Darstellung der geschätzten Rollwiderstandskraft $F_{roll}^{est}$ und ein geschätzter Straßengradient $\alpha^{est}$ in das Fahrzeug-Längsmodell eingesetzt werden.

4. Verfahren nach einem der Ansprüche 1 bis 3, wobei eine Bestimmung erfolgt, ob eine Änderung einer oder mehrerer der Darstellungen der tatsächlichen Rollwiderstandskraft $F_{roll}^{act}$, der tatsächlichen Masse $m^{act}$ und eines tatsächlichen Luftwiderstandparameters $C_{air}^{act}$ des Fahrzeugs sowie eines vom Fahrzeug festgestellten tatsächlichen Straßengradienten $\alpha^{act}$ stattgefunden hat, wobei die Bestimmung eine Bestimmung umfasst, ob sich die Darstellungen dieser waagrecht auf das Fahrzeug einwirkenden Kräfte einander aufheben, wenn die geschätzte Masse $m^{est}$, die Darstellung der geschätzten Rollwiderstandskraft $F_{roll}^{est}$, ein geschätzter Luftwiderstand-Parameter $C_{air}^{act}$ sowie ein geschätzter Straßengradient $\alpha^{est}$ in das Fahrzeug-Längsmodell eingeführt werden.

5. Verfahren nach einem der Ansprüche 1 bis 4, wobei das Fahrzeug-Längsmodell auf dem zweiten Newtonschen Gesetz bezüglich der Kraft basiert, wobei die Darstellungen dieser Kräfte mit waagrechter Einwirkung auf diesen Kräften basieren.

6. Verfahren nach einem der Ansprüche 1 bis 5, wobei das Fahrzeug-Längsmodell durch die Gleichung

$$m \cdot \alpha \ = \ F_{trac} - C_{air} \cdot v^2 \ - \ m \cdot g \cdot sin\alpha \ - \ m \cdot g \cdot C_r;$$

beschrieben wird;
dabei:

- $v$ Fahrzeuggeschwindigkeit
- $a$ Fahrzeugbeschleunigung
- $m$ Gesamtmasse des Fahrzeugs
- $g$ Gravitationskonstante
- $C_r$ Rollwiderstandskoeffizient
- $C_{air}$ Luftwiderstandsparameter
- $\alpha$ aktueller Straßengradient
- $F_{trac}$ Traktionskraft.

**7.** Verfahren nach einem der Ansprüche 1 bis 4, wobei das Fahrzeug-Längsmodell auf dem auf Rotationsgeschwindigkeiten, Trägheiten und Drehmomenten angewendeten zweiten Newtonschen Gesetz basiert, wobei die Darstellungen dieser Kräfte mit waagrechter Einwirkung auf den Rotationsgeschwindigkeiten, Trägheiten und Drehmomenten basieren.

**8.** Verfahren nach Anspruch 7, wobei dann, wenn ein eingesetzter Drehzahlsensor zwischen einem Verbrennungsmotor des Fahrzeugs und einem Referenzpunkt angeordnet wird, für den das Fahrzeug-Längsmodell erstellt wird, das Fahrzeug-Längsmodell durch die Gleichung

$$m \cdot r_{wheel}^2 / n_{wheelToRef}^2 \cdot \dot{\omega}_{sensor} / n_{sensorToRef} = T_{trac} - T_{resistance} / n_{wheelToRef}$$

beschrieben wird;
dabei:

- $m$ Gesamtmasse des Fahrzeugs;
- $r_{wheel}$ Radradius des Fahrzeugs;
- $\omega_{sensor}$ Winkelbeschleunigung für eine aktuelle Position des Drehzahlsensors;
- $T_{Trac}$ Gesamt-Traktionsmoment;
- $T_{resistance}$ Gesamt-Fahrwiderstandsmoment;
- $n_{sensorToRef}$ Übersetzungsverhältnis zwischen dem Drehzahlsensor und dem Referenzpunkt;
- $n_{wheelToRef}$ Übersetzungsverhältnis zwischen einem oder mehreren Fahrzeugrädern und dem Referenzpunkt.

**9.** Verfahren nach Anspruch 7, wobei dann, wenn ein eingesetzter Drehzahlsensor zwischen einem Referenzpunkt, für den das Fahrzeug-Längsmodell erstellt wird, und mindestens einem Fahrzeugrad angeordnet wird, das Fahrzeug-Längsmodell durch die Gleichung

$$m \cdot r_{wheel}^2 / n_{wheelToRef}^2 \cdot \dot{\omega}_{sensor} \cdot n_{sensorToRef} = T_{trac} - T_{resistance} / n_{wheelToRef}$$

beschrieben wird;
dabei:

- $m$ Gesamtmasse des Fahrzeugs;
- $r_{wheel}$ Radradius des Fahrzeugs;
- $\omega_{sensor}$ Winkelbeschleunigung für eine aktuelle Position des Drehzahlsensors;
- $T_{Trac}$ Gesamt-Traktionsmoment;
- $T_{resistance}$ Gesamt-Fahrwiderstandsmoment;
- $n_{sensorToRef}$ Übersetzungsverhältnis zwischen dem Drehzahlsensor und dem Referenzpunkt;
- $n_{wheelToRef}$ Übersetzungsverhältnis zwischen einem oder mehreren Fahrzeugrädern und dem Referenzpunkt.

**10.** Verfahren nach einem der Ansprüche 1 bis 9, wobei die Nutzung der Bestimmung, ob die Änderung stattgefunden hat, ein oder mehrere Elemente aus der Gruppe aufweist:

- eine Meldung an Systeme, die die geschätzte Masse $m^{est}$ und/oder die Darstellung der geschätzten Rollwiderstandskraft $F_{roll}^{est}$ verwenden, dass neue Schätzungen vorgenommen werden sollten; und

- eine Meldung an Systeme, die die geschätzte Masse $m^{est}$ und die Darstellung der geschätzten Rollwiderstandskraft $F_{roll}^{est}$ verwenden, dass die geschätzte Masse $m^{est}$ und die Darstellung der geschätzten Rollwiderstandskraft $F_{roll}^{est}$ veraltet sind.

11. Computerprogramm, das einen Programmcode aufweist, der bei Ausführung auf einem Computer dazu eingerichtet ist, zu bewirken, dass der Computer das Verfahren nach einem der Ansprüche 1 bis 10 ausführt.

12. Computerprogrammprodukt, das ein computerlesbares Medium und ein Computerprogramm nach Anspruch 11 aufweist, wobei das Computerprogramm in dem computerlesbaren Medium enthalten ist.

13. System zur Verwaltung einer Änderung der tatsächlichen Werte für die Fahrwiderstandskraft $F_{drivingres}$ eines Fahrzeugs beeinflussenden Parameter, aufweisend:

   - eine Modelleinheit, die zum Definieren eines Fahrzeug-Längsmodells ausgeführt ist, das Darstellungen von waagrecht auf ein Fahrzeug einwirkenden Kräften in einem gültigen Fahrmodus aufweist;
   - eine Bestimmungseinrichtung, die zum Bestimmen, ob eine Änderung einer oder mehrerer Darstellungen einer tatsächlichen Rollwiderstandskraft $F_{roll}^{act}$ und einer tatsächlichen Masse $m^{act}$ des Fahrzeugs stattgefunden hat, ausgeführt ist,

   **dadurch gekennzeichnet, dass**
   die Bestimmungseinrichtung zum Bestimmen ausgeführt ist, ob die Darstellungen der waagrecht auf das Fahrzeug einwirkenden Kräfte einander aufheben, wenn eine geschätzte Masse $m^{est}$ und eine Darstellung einer geschätzten Rollwiderstandskraft $F_{roll}^{est}$ in das Fahrzeug-Längsmodell eingefügt werden; und

   - eine Nutzungseinrichtung zum Bestimmen ausgeführt ist, ob die Änderung stattgefunden hat, wobei die Bestimmung, ob die Darstellungen der Kräfte einander aufheben, mittels einer residuenbasierten Detektion erfolgt.

14. Kraftfahrzeug, das ein System nach Anspruch 13 aufweist.

**Revendications**

1. Procédé pour la gestion d'un changement de valeurs réelles pour des paramètres impactant une force de résistance à l'avancement $F_{résistavancement}$ pour un véhicule, comprenant :

   - une définition, au moyen d'une unité de modèle, d'un modèle longitudinal d'un véhicule, comprenant des représentations de forces ayant un impact horizontal sur ledit véhicule dans un mode d'entraînement valide ;
   - une détermination, avec un dispositif de détermination, si un changement dans une ou plusieurs parmi une représentation de la force réelle de résistance au roulement $F_{roll}^{act}$, et une masse réelle $m^{réel}$ pour ledit véhicule s'est produite, **caractérisé en ce que** ladite détermination comprend la détermination si lesdites représentations de forces ayant un impact horizontal sur ledit véhicule s'annulent lorsqu'une masse estimée $m^{réel}$ et une représentation d'une force estimée de résistance au roulement $F_{roll}^{est}$ et des valeurs connues pour lesdites représentations de forces dans ledit modèle longitudinal d'un véhicule sont insérées dans ledit modèle longitudinal d'un véhicule, dans lequel lesdites valeurs connues pour lesdites représentations desdites forces comprennent des valeurs calculées pour lesdites représentations desdites forces, qui ont été calculées sur base de paramètres mesurés et/ou hypothèses à propos de paramètres qui sont associés auxdites représentations desdites forces ;

et

- une utilisation, avec un dispositif d'utilisation, de ladite détermination si ledit changement s'est produit dans des systèmes de véhicule adaptés pour la sélection automatique de vitesses ou un régulateur de vitesse, dans lequel ladite détermination si lesdites représentations desdites forces s'annulent est réalisé en utilisant une détection à base résiduelle.

2. Procédé selon la revendication 1, dans lequel une détermination si un changement dans une ou plusieurs parmi lesdites représentations de ladite force réelle de résistance au roulement $F_{roll}^{act}$, ladite masse réelle $m^{réel}$, et un paramètre réel de résistance à l'air $C_{air}^{act}$ pour ledit véhicule s'est produit est effectué, ladite détermination comprenant une détermination si lesdites représentations desdites forces ayant un impact horizontal sur ledit véhicule s'annulent lorsque ladite masse estimée $m^{réel}$, ladite représentation de ladite force estimée de résistance au roulement $F_{roll}^{est}$ et un paramètre estimé de résistance à l'air $C_{air}^{est}$ sont introduits dans ledit modèle longitudinal d'un véhicule.

3. Procédé selon l'une quelconque des revendications 1-2, dans lequel une détermination si un changement dans une ou plusieurs parmi lesdites représentations de ladite force réelle de résistance au roulement $F_{roll}^{est}$, et ladite masse réelle $m^{réel}$ pour ledit véhicule, et une pente réelle de la route $a^{réel}$ subie par ledit véhicule s'est produite, est effectuée, ladite détermination comprenant une détermination si lesdites représentations desdites forces ayant un impact horizontal sur ledit véhicule s'annulent lorsque ledit masse estimée $m^{est}$, ladite représentation de ladite force estimée de résistance au roulement $F_{roll}^{act}$ et une pente estimée de la route $a^{est}$ sont introduites dans ledit modèle longitudinal d'un véhicule.

4. Procédé selon l'une quelconque des revendications 1-3, dans lequel une détermination si un changement dans une ou plusieurs parmi lesdites représentations de ladite force réelle de résistance au roulement $F_{roll}^{act}$, ladite masse réelle $m^{réel}$ et un paramètre réel de résistance à l'air $C_{air}^{act}$ pour ledit véhicule, et une pente réelle de la route $a^{réel}$ subie par ledit véhicule s'est produit, est effectué, ladite détermination comprenant une détermination si lesdites représentations desdites forces ayant un impact horizontal sur ledit véhicule s'annulent lorsque ladite masse estimée $m^{est}$, ladite représentation de ladite force estimée de résistance au roulement $F_{roll}^{est}$ un paramètre estimé de résistance à l'air $C_{air}^{est}$ et une pente estimée de la route $a^{est}$ sont introduits dans ledit modèle longitudinal d'un véhicule.

5. Procédé selon l'une quelconque des revendications 1-4, dans lequel ledit modèle longitudinal d'un véhicule se base sur la deuxième loi de Newton de force, dans lequel lesdites représentations d'effet horizontal se basent sur lesdites forces.

6. Procédé selon l'une quelconque des revendications 1-5, dans lequel ledit modèle longitudinal d'un véhicule est décrit par l'équation :

$$m \cdot a = F_{trac} - C_{air} \cdot v^2 - m \cdot g \cdot \sin\alpha - m \cdot g \cdot C_r;$$

où

- **v** est une vitesse du véhicule ;
- **a** est une accélération du véhicule ;
- **m** est une masse totale du véhicule ;
- **g** est la constante gravitationnelle ;
- **C**$_r$ est un coefficient de résistance au roulement ;
- **C**$_{air}$ est un paramètre de résistance à l'air ;
- $\alpha$ est une pente actuelle de la route ;
- **F**$_{trac}$ est une force de traction.

**7.** Procédé selon l'une quelconque des revendications 1-4, dans lequel ledit modèle longitudinal d'un véhicule se base sur la deuxième loi de Newton appliquée aux vitesses de rotation, inerties et couples, dans lequel lesdites représentations desdites forces ayant un effet horizontal se basent sur lesdites vitesses de rotation, inerties et couples.

**8.** Procédé selon la revendication 7, dans lequel, si un capteur de vitesse utilisé est placé entre un moteur dans ledit véhicule et un point de référence pour lequel ledit modèle longitudinal d'un véhicule est établi, ledit modèle longitudinal d'un véhicule est décrit par l'équation :

$$m \cdot r^2_{roue} / n^2_{roue\grave{a}R\acute{e}f} \cdot \dot{\omega}_{capteur} / n_{capteur\grave{a}R\acute{e}f} = T_{trac} - T_{r\acute{e}sistance} / n_{roue\grave{a}R\acute{e}f}$$

où

- **m** est la masse totale du véhicule ;
- **r**$_{roue}$ est un rayon des roues pour ledit véhicule ;
- $\omega_{capteur}$ est une accélération angulaire pour une position actuelle pour ledit capteur de vitesse ;
- T$_{trac}$ est un couple de traction totale ;
- **T**$_{résistance}$ est un couple de résistance à l'avancement totale ;
- **n**$_{capteuràRéf}$ est un rapport d'engrenage entre ledit capteur de vitesse et ledit point de référence ; et
- **n**$_{roueàRéf}$ est un rapport d'engrenage entre une ou plusieurs roues du véhicule et ledit point de référence.

**9.** Procédé selon la revendication 7, dans lequel, si un capteur de vitesse utilisé est placé entre un point de référence pour lequel ledit modèle longitudinal d'un véhicule est établi, et au moins une roue du véhicule, ledit modèle longitudinal d'un véhicule est décrit par l'équation :

$$m \cdot r^2_{roue} / n^2_{roue\grave{a}R\acute{e}f} \cdot \omega_{capteur} \cdot n_{capteur\grave{a}R\acute{e}f} = T_{trac} - T_{r\acute{e}sistance} / n_{roue\grave{a}R\acute{e}f}$$

où

- **m** est la masse totale du véhicule ;
- **r**$^{roue}$ est un rayon des roues pour ledit véhicule ;
- $\omega_{capteur}$ est une accélération angulaire pour une position actuelle pour ledit capteur de vitesse ;
- **T**$_{trac}$ est un couple de traction totale ;
- **T**$_{résistance}$ est un couple de résistance à l'avancement totale ;
- **n**$_{capteuràRéf}$ est un rapport d'engrenage entre ledit capteur de vitesse et ledit point de référence ; et
- **n**$_{roueàRéf}$ est un rapport d'engrenage entre une ou plusieurs roues du véhicule et ledit point de référence.

**10.** Procédé selon l'une quelconque des revendications 1-9, dans lequel ladit utilisation de ladite détermination si ledit changement s'est produit comprend un ou plusieurs dans le groupe parmi :

- une indication aux systèmes fournissant ladite masse estimée $m^{est}$ et/ou ladite représentation de ladite force estimée de résistance au roulement, $F^{est}_{roll}$ que les nouvelles estimations seront effectuées ; et
- une indication aux systèmes en utilisant ladite masse estimée $m^{est}$ et ladite représentation de ladite force estimée de résistance au roulement, $F^{est}_{roll}$ que ladite masse estimée $m^{est}$ et ladite représentation de ladite force estimée de résistance au roulement $F^{est}_{roll}$ sont dépassées.

**11.** Programme informatique comprenant un code de programme qui, lorsque ledit code de programme est réalisé dans un ordinateur, est adapté à atteindre que ledit ordinateur peut réaliser le procédé selon l'une quelconque des revendications 1-10.

**12.** Produit de programme informatique comprenant un support lisible par ordinateur et un programme informatique selon la revendication 11, ledit programme informatique étant compris dans ledit support lisible par ordinateur.

**13.** Système pour la gestion d'un changement de valeurs réelles pour des paramètres impactant une force de résistance à l'avancement $F_{résistavancement}$ pour un véhicule, comprenant :

- une unité de modèle agencée pour définir un modèle longitudinal d'un véhicule, comprenant des représentations de forces ayant un impact horizontal sur ledit véhicule dans un mode d'entraînement valide ;
- un dispositif de détermination agencé pour déterminer si un changement dans une ou plusieurs d'une représentation d'une force réelle de résistance au roulement $F_{roll}^{act}$ et une masse réelle $m^{réel}$ pour ledit véhicule s'est produit, **caractérisé en ce que** ledit dispositif de détermination est agencé pour déterminer si lesdites représentations desdites forces ayant un impact horizontal sur ledit véhicule s'annulent lorsqu'une masse estimée $m^{est}$ et une représentation d'une force estimée de résistance au roulement $F_{roll}^{est}$ sont introduites dans ledit modèle longitudinal d'un véhicule ; et
- un dispositif d'utilisation est agencé pour utiliser ladite détermination si ledit changement s'est produit, dans lequel ladite détermination si lesdites représentations desdites forces s'annulent est réalisée en utilisant une détection à base résiduelle.

**14.** Véhicule à moteur comprenant un système selon la revendication 13.

**[101]**
Define longitudinal
vehicle model

**[102]**
Determine if change in
actual rolling
resistance and/or
actual mass has
occured

**[103]**
Use determination of
whether change has
occured or not

Fig. 1

Fig. 2

FIG. 3a

Vehicle speed[m/s]

FIG. 3b

Residual

FIG. 3c

Content in CUSUM

FIG. 3d

Vehicle mass [tonnes]

Time [s]

Fig. 4

**REFERENCES CITED IN THE DESCRIPTION**

**Patent documents cited in the description**

- DE 10235969 A1

- DE 102011013022 B3